# EUROPEAN PATENT APPLICATION

(11) **EP 4 528 628 A1**
(43) Date of publication of application: **26.03.2025**
(21) Application number: 23807787.9
(22) Date of filing: 09.04.2023
(51) Int. Cl.: G06Q 50/30, G06Q 50/10, G06F 21/31, G09F 19/22

(54) **SERVICE SYSTEM FOR STRENGTHENING FELLOWSHIP BETWEEN GROUP MEMBERS BY USING GROUP-ONLY SIGNAGE**

(30) Priority: 17.05.2022 KR 20220060368
(71) Applicant: Altsoft. Inc., Seoul 06097 (KR)
(72) Inventor: KIM, Chan Hong, Seoul 06097 (KR)
(74) Representative: M. Zardi & Co S.A.
(86) International application number: PCT/KR2023/004769
(87) International publication number: WO 2023/224264

(57) **Abstract**

Proposed is a service system for strengthening fellowship between group members by using a group-only signage device, wherein content created by the group members is output and shared through the group-only signage device installed at a place accessible to the group members, thereby encouraging communication between the group members and strengthening fellowship through content sharing and enabling the group members to have additional enjoyment while viewing the content output to the group-only signage device.

## Description

### Technical Field

The present disclosure relates to a service system for strengthening fellowship. More particularly, the present disclosure relates to a service system for strengthening fellowship between group members by using a group-only signage device.

### Background Art

A signage device is a communication tool that can induce marketing and advertising effects, and customer experiences for businesses. The signage device is an image display device that is installed in public spaces or commercial spaces to provide various information and advertisements in real time. In particular, a digital signage device uses digital technology to display an image and information on a display screen and provides a comprehensive management platform that can be remotely controlled over a network.

The signage device is primarily installed outdoors, in subway stations, and public places, but recently, the installation locations have become more diverse, including restaurants, cafes, and apartment elevators. However, the purpose of the signage device has not significantly expanded beyond its role as an advertising board.

In the meantime, social media for communicating with others on the web has become increasingly important. However, social media is limited to online, so too much attention is paid only to online appearances, or only online human relationships are focused on while real-life human relationships are neglected. In many online human relationships, individuals are rather alienated.

Therefore, there is a need to develop technologies that encourage online communication as well as offline communication and strengthen fellowship in offline human relationships.

In the meantime, as a related art of the present disclosure, disclosed is Korean Patent No. 10-2386273 (title of invention: SIGNAGE SYSTEM THAT WORKS IN CONJUNCTION WITH USER TERMINALS, registration date: 8 April 2022).

### Disclosure

### Technical Problem

The present disclosure has been made keeping in mind the above problems occurring in the previously proposed methods, and the present disclosure is directed to providing a service system for strengthening fellowship between group members by using a group-only signage device, wherein content created by the group members is output and shared through the group-only signage device installed at a place accessible to the group members, thereby encouraging communication between the group members and strengthening fellowship through content sharing and enabling the group members to have additional enjoyment while viewing the content output to the group-only signage device.

### Technical Solution

In order to achieve the above objective, according to one aspect of the present disclosure, there is provided a service system for strengthening fellowship between group members by using a group-only signage device,
the service system for strengthening fellowship including:
a service server configured to provide a fellowship strengthening service through content sharing between the group members;
the group-only signage device having a display panel on the front, and installed in a place accessible to the group members, and configured to output content of the group members to the display panel; and
member terminals, as terminals of the group members, configured to create the content and share the created content through the group-only signage device,
wherein the service server includes:
   a group management part configured to store and manage, for each group, information on the group members belonging to a group and use rights of the group members; and
   a signage device management part configured to, according to the use rights of the group members, receive the content created by the member terminals, and control transmission so that the received content is output to the group-only signage device of the group to which the group members belong, and
   the group-only signage device is configured to
   output the content of the group members to strengthen communication and fellowship between the group members through the sharing of the content.

Preferably, the service server may further include:
an authentication part configured to authenticate that the group members are members of the group; and
a right management part configured to give the use rights to share the content through the group-only signage device to the group members authenticated by the authentication part, and
the group management part may be configured to
store and manage the information on the group members authenticated by the authentication part and the use rights given by the right management part.

More preferably, the authentication part may be configured to
process an authentication procedure to authenticate the group members through at least one authentication method selected from a group of scanning a QR code issued to the group, an acceptance signal of a group master, matching to a group member list stored by the group master, inputting authentication information set by the group master, and matching to the information on the group members stored in the group management part.

Preferably, the content
may include at least one selected from a group of an image, text, and a video, and may be of a predetermined length or less.

Preferably, the group-only signage device may be configured to
output the content in order of creation or in order of popularity.

Preferably, the service server
may further include a database part configured to store, for each group, the content, and
the signage device management part may be configured to
receive the content created by the member terminals, and store the content in the database as the content of the group to which the group members belong.

Preferably, the group members
may consist of the group master and a general member, and
the signage device management part may be configured to
set or change, according to a control signal of the group master, at least one piece of setting information selected from a group of the number of content outputs, output time, a layout, and background music of the group-only signage device.

Preferably, the service server
may further include an editing part configured to provide an editing tool to the member terminals for creating the content.

### Advantageous Effects

According to a service system for strengthening fellowship between group members by using a group-only signage device proposed in the present disclosure, content created by the group members is output and shared through the group-only signage device installed at a place accessible to the group members, thereby encouraging communication between the group members and strengthening fellowship through content sharing and enabling the group members to have additional enjoyment while viewing the content output to the group-only signage device.

### Description of Drawings

FIG. 1 is a diagram illustrating the overall configuration of a service system for strengthening fellowship between group members by using a group-only signage device according to an embodiment of the present disclosure.
FIG. 2 is a diagram illustrating an example of a group configuration, in a service system for strengthening fellowship between group members by using a group-only signage device according to an embodiment of the present disclosure.
FIG. 3 is a diagram illustrating a detailed configuration of a service server, in a service system for strengthening fellowship between group members by using a group-only signage device according to an embodiment of the present disclosure.
FIGS. 4 and 5 are diagrams illustrating examples of a display screen of a group-only signage device in which content is output, in a service system for strengthening fellowship between group members by using a group-only signage device according to an embodiment of the present disclosure.

### <Description of the Reference Numerals in the Drawings>

- 100:: service server
- 110:: group management part
- 120:: authentication part
- 130:: right management part
- 140:: signage device management part
- 150:: database
- 160:: editing part
- 200:: group-only signage device
- 300:: member terminals

### Best Mode

Hereinafter, preferred embodiments of the present disclosure will be described in detail with reference to the accompanying drawings such that the present disclosure can be easily embodied by those skilled in the art to which the present disclosure belongs. However, in describing the preferred embodiments of the present disclosure in detail, if it is decided that a detailed description of the known function or configuration related to the present disclosure makes the subject matter of the present disclosure unclear, the detailed description will be omitted. In addition, throughout the drawings, the same reference numerals are used for parts having similar functions and operations.

Throughout the specification, when a part is referred to as being "connected" to another part, it includes not only being "directly connected", but also being "indirectly connected" by interposing the other part therebetween. In addition, when a part "includes" an element, this means that it further includes other elements, but does not exclude other elements, unless specifically stated otherwise.

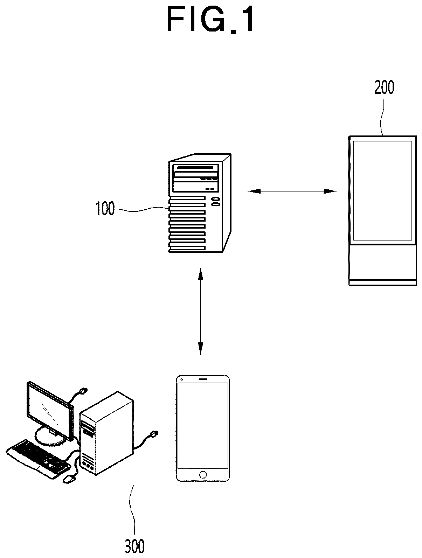

FIG. 1 is a diagram illustrating the overall configuration of a service system for strengthening fellowship between group members by using a group-only signage device 200 according to an embodiment of the present disclosure. As shown in FIG. 1, a service system for strengthening fellowship between group members by using a group-only signage device 200 according to an embodiment of the present disclosure may include a service server 100, the group-only signage device 200, and member terminals 300.

That is, according to the present disclosure, the service server 100 receives content created by the group members, and outputs the content through the group-only signage device 200 installed at a place accessible to the group members, allowing the group members to share the content. In this way, by outputting the content created by the group members to the group-only signage device 200, the group members can communicate naturally while viewing the group-only signage device 200 together, as opposed to viewing their personal terminals individually. In addition, the group members can feel a new sense of excitement and fun while viewing the content through the signage device, which is generally larger in size than the personal terminals, and can keep up to date with news in real time from the group members who are not in the same space. The group members who are not familiar with the personal terminals can view the content through the group-only signage device 200. The nature of the signage device that performs displaying continuously makes it easy to view the content that the group members share without executing an application or accessing a website. Accordingly, the group members can feel a strong sense of connection to each other and fellowship can be strengthened.

Herein, a group may consist of a plurality of group members who use a particular offline space together where the group-only signage device 200 may be installed. Examples of the group may include a family, a school, a church, a company, and an apartment. In addition, the group members in the group may consist of a group master, who manages the group-only signage device 200, and general members. The group master may manage the group-only signage device 200 and may manage use rights for the general members.

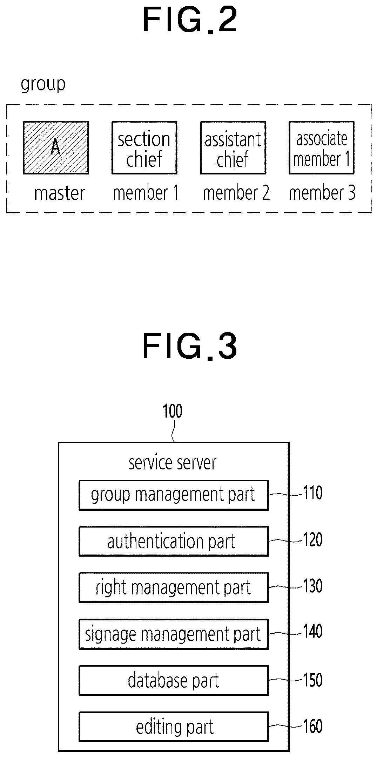

FIG. 2 is a diagram illustrating an example of a group configuration, in a service system for strengthening fellowship between group members by using a group-only signage device 200 according to an embodiment of the present disclosure. As shown in FIG. 2, in a service system for strengthening fellowship between group members by using a group-only signage device 200 according to an embodiment of the present disclosure, when a group is a team in a company, one of the team members, A, is the group master and team members, a section chief, an assistant chief, and an associate member, are general members. In addition, when the group is a particular class in a school, the classroom teacher is the group master and the students in the class are general members. Groups may have different configurations.

Hereinafter, each of the elements constituting a service system for strengthening fellowship between group members by using a group-only signage device 200 according to an embodiment of the present disclosure will be described in detail.

The service server 100 may provide a service for strengthening fellowship through content sharing between the group members. That is, the service server 100 may manage the group-only signage device 200 at a remote location. More specifically, the service server may transmit content to the group-only signage device 200 and manage an output state. In addition, the service server 100 may authenticate the member terminals 300 that access the service server over the network, and may manage right, and may receive content. A detailed configuration of the service server 100 will be described later with reference to FIG. 3.

Herein, the network may be a wired network, such as a local area network (LAN), a wide area network (WAN), or a value-added network (VAN), or any types of wireless networks, such as a mobile radio communication network, a satellite network, Bluetooth, wireless broadband Internet (WiBro), High Speed Downlink Packet Access (HSDPA), long-term evolution (LTE), and 3/4/5/6th-generation mobile telecommunication (3/4/5/6G).

According to an embodiment, the service server 100 may operate a webpage for each group or signage device to enable the group members to access the webpage of the group by using member terminals 300 and to use functions, such as uploading content, viewing content, inputting feedback, e.g., comments or likes, and managing the group-only signage device 200, according to the rights of the respective group members.

The group-only signage device 200 may be provided with a display panel on its front, may be installed at a place accessible to the group members, and may output the content of the group members to the display panel. More specifically, the group-only signage device 200 may output the content of the group members to strengthen communication and fellowship between the group members through the sharing of content. Herein, the group-only signage device 200 may mean a display device provided with a display panel, and examples of the group-only signage device may include large-sized displays used as outdoor billboards as well as displays sized to be installed in houses, classrooms, and elevators.

The member terminals 300, as terminals of the group members, may create content and share the created content through the group-only signage device 200. The member terminals 300 may be realized as electronic devices that perform various functions related to the group-only signage device 200, such as creating content to be uploaded to the group-only signage device 200, transmitting the content to the service server 100, accessing a group-specific webpage of the service server 100 to view the content output to the group-only signage device 200.

Herein, examples of the electronic device may include at least one of the following: a smartphone, a tablet personal computer (PC), a mobile phone, a video phone, an e-book reader, a desktop PC, a laptop PC, a netbook computer, a workstation, a server, a personal digital assistant (PDA), a media box, a game console, an electronic dictionary, and a wearable device. Examples of the wearable device may include at least one of the following: an accessory type (e.g., a watch, ring, bracelet, anklet, necklace, glasses, contact lens, or a head-mounted device (HMD)), a fabric or clothing-integrated type (e.g., electronic clothing), a body-attachable type (e.g., a skin pad or tattoo), and an implantable circuit. In various embodiments, the electronic device is not limited to the aforementioned devices, and may be a combination of two or more of the aforementioned various devices.

The member terminals 300 may have an application installed thereon for performing various functions related to the group-only signage device 200, and may access the service server 100 through a web application, a web browser, or an application and manage the group-only signage device 200 through a group-specific webpage.

In addition, the member terminals 300 may execute an editing function for creating content, and the editing function may include photograph editing, text editing, and video editing functions that the service server 100 or an application provides.

FIG. 3 is a diagram illustrating a detailed configuration of a service server 100, in a service system for strengthening fellowship between group members by using a group-only signage device 200 according to an embodiment of the present disclosure. As shown in FIG. 3, in a service system for strengthening fellowship between group members by using a group-only signage device 200 according to an embodiment of the present disclosure, a service server 100 may include a group management part 110 and a signage device management part 140, and may further include an authentication part 120, a right management part 130, a database part 150, and an editing part 160.

The group management part 110 may store and manage information on group members belonging to a group and use rights of the group members for each group. That is, the group management part 110 may store, for each group, login information, authentication information, and contact information of group members, and may store, for each group, setting of a group master and a general member. In addition, the group management part 110 may edit, such as add, change, and delete, the information on the group members according to the setting of the group master, and may also edit the use rights, such as changing the use rights of the general member or changing the group master.

In the meantime, the group management part 110 may connect and register, for each group, the group-only signage device 200 used by each group. Herein, a plurality of the group-only signage devices 200 may be for each group. For example, if there are many members of a team group in a company and they work separately in different offices or floors, a plurality of group-only signage devices 200 installed in the respective offices or floors may be connected to one group and registered. In addition, when a group size, such as a church, is large, multiple group-only signage devices 200 may be required. In this case, the group management part 110 may connect and register a plurality of group-only signage devices 200 to the group.

The authentication part 120 may authenticate that the group members are members of a group. More specifically, the authentication part 120 may process an authentication procedure to authenticate group members through at least one authentication method selected from the group of scanning a QR code issued to the group, an acceptance signal from the group master, matching to a group member list stored by the group master, inputting authentication information set by the group master, and matching to group member information stored in the group management part 110.

For example, the group master may obtain a QR code issued from the service server 100 for joining the group, and may provide the issued QR code to a user who is eligible to join. A user who wants to be authenticated may access the service server 100 and scan the QR code provided from the group master to be authenticated and join as a member of the group the group master manages.

In addition, when a user who wants to be authenticated accesses the service server 100 to input information, such as contact information, the authentication part 120 may use information on group members stored in the group management part 110 to present a group that the user can join through authentication, and the user may select the presented group to join as a group member. To this end, the group master may preset and register information on group members who can join the group the group master manages.

The right management part 130 may give use rights to share content through the group-only signage device 200 to group members authenticated by the authentication part 120. That is, only group members authenticated by the authentication part 120 may be given use rights to upload content to the group-only signage device 200 of the group, so that other users outside the group are unable to use the group-only signage device. Accordingly, the group members within the group communicate exclusively through the group-only signage device 200, which can strengthen fellowship within the group.

The group management part 110 may store and manage information on the group members authenticated by the authentication part 120 and the use rights given by the right management part 130. That is, in conjunction with the authentication part 120 and the right management part 130, the group management part 110 may manage authentication status, joining status of the group members, and a use right of each group member for each group.

The signage device management part 140 may receive content created by the member terminals 300 according to the use rights of the group members, and may control transmission so that the received content is output to the group-only signage device 200 of the group to which the group members belong. That is, the signage device management part 140 may transmit the content to the group-only signage device 200 so that the content is output to the group-only signage device 200 of the group to which the group members belong, and may upload the content to a group-specific webpage of the group so that the content is viewed with the member terminals 300.

Herein, the content may include at least one selected from the group of an image, text, and a video, and may be of a predetermined length or less. Since the content is output through the group-only signage device 200, an image and a short text of three sentences or less are based so that the details of the content is intuitively understood with a brief glance at the display screen. In addition, the content may include a plurality of images (photographs) and text. For example, several photographs taken at a get-together may be composed into one piece of content. The several photographs may include text for each photograph.

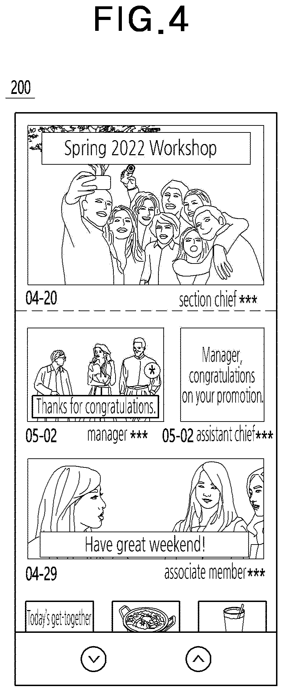

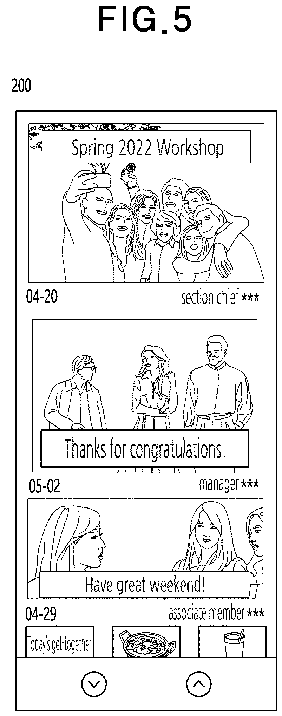

FIGS. 4 and 5 are diagrams illustrating examples of a display screen of a group-only signage device 200 in which content is output, in a service system for strengthening fellowship between group members by using a group-only signage device 200 according to an embodiment of the present disclosure. As shown in FIGS. 4 and 5, in a service system for strengthening fellowship between group members by using a group-only signage device 200 according to an embodiment of the present disclosure, the group-only signage device 200 may output the content uploaded by the group members under the control of the signage device management part 140. That is, as shown in FIG. 4, on the group-only signage device 200 of a team group of a company, various types of content, such as a workshop photograph, a promotion congratulatory message ("Manager, congratulations on your promotion!") from a team member, a reply message ("Thanks for the congratulations") in response to the promotion congratulatory message, and weekend greeting ("Have a great weekend!"), may be output to the group-only signage device 200 of the team. Accordingly, a member who first recognizes a team member's promotion may leave a congratulatory message, and all the team members congratulate the team member while viewing the congratulatory message, thereby strengthening communication between the team members.

As shown in FIG. 4, multiple pieces of content may be simultaneously output to the display panel of the group-only signage device 200. That is, in general, the screen of a signage device is larger than that of a personal terminal, such as a mobile terminal or a tablet PC, so a plurality of pieces of content may be simultaneously displayed. In addition, there may be various layouts of the display screen of the group-only signage device 200, and layouts, such as the size or placement of displayed content, may be flexibly configured to provide additional enjoyment.

According to an embodiment, when one piece of content includes a plurality of images (photographs), the plurality of photographs may be repeatedly displayed in sequence in one content frame. For example, the workshop content displayed at the top of FIG. 4 may include several photographs taken at the workshop, and the several photographs may be repeatedly displayed, automatically rotating at regular time intervals.

In addition, if the group-only signage device 200 is capable of user interaction, such as touch, when particular content is selected, the content may be displayed enlarged. That is, on the display screen of the group-only signage device 200 as shown in FIG. 4, when the content ("Thanks for the congratulations") of the thank you message corresponding to the promotion congratulatory message is selected, the content is displayed enlarged so that the details, such as a photograph, a message, a creation date, and a creator, are be easily viewed as shown in FIG. 5.

In the meantime, the group-only signage device 200 may output content in order of creation or popularity. That is, the most recently created content may be exposed at the top, and the content with the most feedback, such as views, selections, and likes, may be exposed at the top. In addition, content may be output in a form in which the order of creation and the order of popularity are combined. For example, the display screen of the group-only signage device 200 may be operated by being divided into an area in which content is output in order of popularity and an area in which content is output in order of creation. In the example shown in FIG. 4, popular content, such as a workshop photograph, may be output separately at the top, and under the popular content, content may be output in order of creation. Herein, at the top where popular content is output, a particular number of pieces of content may be changed and displayed in order of popularity.

The signage device management part 140 may set or change, according to a control signal of the group master, at least one piece of setting information selected from the group of the number of content outputs, the output time, layouts, and background music of the group-only signage device 200. That is, the group master may access the service server 100 to view or change the setting information of the group-only signage device 200, and the signage device management part 140 may remotely control the group-only signage device 200 to apply the setting information of the group master in real time. For example, the group master may use the member terminal 300 to access the service server 100 and change the layout of the group-only signage device 200.

In the meantime, a group member who uploads content may create setting so that the other group members are unable to view the content for a particular period of time. For example, if a group member in a company team group has a birthday coming up, the content to celebrate the birthday may be transmitted to the service server 100 in advance and the content may be set to be exposed to the group-only signage device 200 at a predetermined time on the birthday. Herein, the content may be made invisible to the general members as well as the group master.

The database part 150 may store content for each group. The signage device management part 140 may receive content created by the member terminals 300, and may store the received content in a database as content of the group to which the group members belong. The service server 100 may operate a webpage for each group. The content stored for each group in the database part 150 may be uploaded to a group-specific webpage, and the members may view the content through the group-specific webpage and input various types of feedback, such as likes and comments. Accordingly, group members are able to view content and input feedback even when the group members are away from the group-only signage device 200 or the group-only signage device 200 is a non-interactive display, thereby strengthening communication and fellowship between the group members.

The editing part 160 may provide an editing tool to the member terminals 300 for creating content. The editing tool that the editing part 160 provides may include a tool for editing photographs, text, or videos to create content for sharing through the group-only signage device 200. More specifically, the size and shape of a photograph or the font and length of text may be specific to content for the group-only signage device 200. Various filters, stickers, and images for editing a photograph may be provided. Various tools for selecting and applying the size, color, font, and position of text may be provided. In addition, the editing part 160 may provide a preview function to the member terminals 300 so that what the created content will look like can be viewed in advance when the created content is output to the group-only signage device 200.

As described above, according to a service system for strengthening fellowship between group members by using a group-only signage device 200 proposed in the present disclosure, content created by the group members is output and shared through the group-only signage device 200 installed at a place accessible to the group members, thereby encouraging communication between the group members and strengthening fellowship through content sharing and enabling the group members to have additional enjoyment while viewing the content output to the group-only signage device 200.

In the meantime, the present disclosure may include a computer-readable recording medium including program commands for performing operations implemented by various communication terminals. Examples of the computer-readable recording medium include magnetic recording media such as hard disks, floppy disks and magnetic tapes; optical data storage media such as CD-ROMs or DVD-ROMs; magneto-optical media such as floptical disks; and hardware devices, such as read-only memory (ROM), random-access memory (RAM), and flash memory, which are particularly structured to store and implement the program instruction.

The computer-readable recording medium may include program commands, data files, data structures, and the like separately or in combinations. Herein, the program commands being recorded in the computer-readable medium may correspond to a program command that is specifically designed and configured for the embodiments of the present disclosure, or the program command may correspond to a program command that is disclosed and available to anyone skilled in or related to computer software. For example, the program commands may include machine language codes, which are created by a compiler, as well as high-level language codes, which may be executed by a computer by using an interpreter.

Various modifications or applications of the above-described present disclosure may be made by those skilled in the art to which the present disclosure belongs, and the scope of the technical idea according to the present disclosure should be defined by the following claims.

## Claims

1. A service system for content sharing between group members by using a group-only signage device (200), the service system comprising:
a service server (100) configured to provide a content sharing service between the group members;
the group-only signage device (200) having a display panel on the front, and installed in an offline space used by a plurality of the group members together, and configured to output content created by the group members to the display panel; and
member terminals (300), as terminals of the group members, configured to create the content and share the created content through the group-only signage device (200),
wherein the service server (100) comprises:
a group management part (110) configured to store and manage, for each group, information on the group members belonging to a group and use rights of the group members;
an authentication part (120) configured to authenticate that the group members are members of the group; and
a right management part (130) configured to give the use rights to share the content through the group-only signage device (200) to the group members authenticated by the authentication part (120); and
a signage device management part (140) configured to receive the content created by the member terminals (300), and perform transmission so that according to the use rights of the group members, the received content is output to the group-only signage device (200) of the group to which the group members belong,
wherein the authentication part (120) is configured to
process an authentication procedure to authenticate the group members through at least one authentication method selected from a group of scanning a QR code issued to the group, an acceptance signal of a group master, matching to a group member list stored by the group master, inputting authentication information set by the group master, and using the information on the group members stored in the group management part (110), and
the right management part (130) is configured to
give the use rights to upload the content to the group-only signage device (200) of the group to only the group members authenticated by the authentication part (120), so that other users outside the group are unable to use the group-only signage device, and
the group-only signage device (200) is configured to
output the content created by the group members to enable the group members within the group to communicate exclusively via the content shared on the group-only signage device (200).

2. The service system of claim 1, wherein the content output from the group-only signage device (200) includes at least one selected from a group of an image, text, and a video, and the text is of a predetermined length or less.

3. The service system of claim 1, wherein the group-only signage device (200) is configured to
output the content created by the group members in order of creation or in order of popularity, or operate a display screen of the group-only signage device (200) divided into an area in which the content is output in order of creation and an area in which the content is output in order of popularity.

4. The service system of claim 1, wherein the service server (100) further comprises
a database part (150) configured to store, for each group, the content created by the group members,
wherein the signage device management part (140) is configured to
receive the content created by the member terminals (300), and store the content in the database part as the content of the group to which the group members belong.

5. The service system of claim 1, wherein the group members consist of
the group master and a general member, and
the signage device management part (140) is configured to
set or change, according to a control signal of the group master, at least one piece of setting information selected from a group of the number of content outputs, output time, a layout, and background music of the group-only signage device (200).

6. The service system of claim 1, wherein the service server (100) further comprises
an editing part (160) configured to provide an editing tool to the member terminals (300) for creating the content.
